# DEMANDE DE BREVET EUROPEEN

(11) **EP 0 765 783 A1**
(43) Date de publication de la demande: **02.04.1997**
(21) Numéro de dépôt: 96115431.7
(22) Date de dépôt: 26.09.1996
(51) Int. Cl.: B60S 1/38

(54) **Essuie-glace de véhicule automobile muni d'un déflecteur souple comportant des doigts de contact contre la vitre à essuyer**

(30) Priorité: 29.09.1995 FR 9511510
(71) Demandeur: VALEO SYSTEMES D'ESSUYAGE, 78321 La Verrière (FR)
(72) Inventeur: Maubray, Daniel, 92130 Issy Les Moulineaux (FR)
(74) Mandataire: Gamonal, Didier

(57) **Abrégé**

L'invention propose un essuie-glace de véhicule automobile, du type dans lequel un balai d'essuie-glace (12) comporte un déflecteur aérodynamique souple (40), caractérisé en ce que le déflecteur (40) comporte au moins un doigt de contact (44) qui est en appui contre la vitre à essuyer et qui commande la déformation du déflecteur (40) en fonction du galbe de la vitre.

## Description

L'invention concerne un essuie-glace de véhicule automobile muni d'un déflecteur souple comportant des doigts de contact contre la vitre à essuyer.

L'invention concerne plus particulièrement un essuie-glace de véhicule automobile, du type comportant un balai d'essuie-glace muni d'une structure articulée qui est déformable dans un plan longitudinal perpendiculaire à une vitre à essuyer, qui porte, au moyen d'une série de griffes agencées à chacune de ses extrémités terminales, une raclette d'essuyage en matériau souple, et qui plaque la raclette contre la vitre de sorte que la raclette en épouse le galbe, et du type comportant un déflecteur aérodynamique souple monté sur le balai.

Un déflecteur aérodynamique pour balai d'essuie-glace permet, d'une part, de fournir un appui aérodynamique tendant à plaquer le balai contre la vitre lorsque Je véhicule se déplace à haute vitesse et, d'autre part, d'éviter que les filets d'air qui s'écoulent le long de la vitre ne perturbent le contact de la raclette contre la vitre, ce qui est nuisible à un bon essuyage de celle-ci.

Pour cela, il est nécessaire que le déflecteur se situe le plus près possible de la raclette et donc le plus près possible de la vitre à essuyer. Or, la raclette d'essuyage est susceptible d'épouser le galbe de la vitre qui peut s'avérer très prononcé, notamment dans le cas d'un pare-brise avant de véhicule automobile, et il est donc apparu intéressant de réaliser le déflecteur aérodynamique en matériau souple afin qu'il puisse suivre les déformations de la raclette et ainsi suivre le galbe du pare-brise.

A cet effet, il a été proposé un déflecteur souple monté sur la structure articulée du balai d'essuie-glace et comportant des doigts de commande, en appui sur un dos supérieur de la raclette, susceptibles de transmettre au déflecteur les déformations de la raclette.

Toutefois, ce dispositif s'avère fort complexe car il nécessite par ailleurs des points d'attache sur la structure articulée qui autorisent un coulissement vertical du déflecteur par rapport à la structure articulée, et les doigts de commande des déformations du déflecteur, qui sont en appui unidirectionnel sur la raclette, ne peuvent pas provoquer le retour du déflecteur vers sa position de repos.

Il faut alors compter sur l'élasticité du matériau formant le déflecteur pour que celui-ci revienne dans sa forme initiale, ce qui implique qu'il exerce lui-même à tout moment un effort parasite sur la raclette tendant à augmenter sa pression de contact contre la vitre au centre du balai, au détriment des extrémités.

Aussi, dans le but d'apporter une solution à ces problèmes, l'invention propose un essuie-glace du type vu précédemment, caractérisé en ce que le déflecteur comporte au moins un doigt de contact qui est en appui contre la vitre à essuyer et qui commande la déformation du déflecteur en fonction du galbe de la vitre.

Selon d'autres caractéristiques de l'invention :
- la structure articulée du balai comporte un étrier longitudinal principal qui est monté pivotant sur un bras d'essuie-glace et qui porte au moins un palonnier articulé à une de ses extrémités, avec éventuellement interposition d'un étrier secondaire, chaque palonnier comporte deux griffes de fixation de la raclette, et le déflecteur comporte au moins un organe de fixation sur un élément de la structure articulée autre que l'étrier principal, ou sur la raclette de manière à ce que le déflecteur soit déformé par ses organes de fixation jusqu'à obtenir un profil sensiblement équivalent à celui du galbe de la vitre, le doigt de contact provoquant une adaptation fine de la déformation du déflecteur ;
- le doigt de contact s'étend depuis une zone du déflecteur proche d'un bord inférieur tourné en direction de la vitre à essuyer ;
- le doigt de contact est réalisé venu de matière avec le déflecteur souple ;
- le doigt de contact est réalisé sous la forme d'une pièce indépendante sur laquelle le déflecteur est surmoulé ; et
- le déflecteur comporte plusieurs doigts de contact répartis régulièrement sur toute sa longueur.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un essuie-glace conforme aux enseignements de l'invention ;

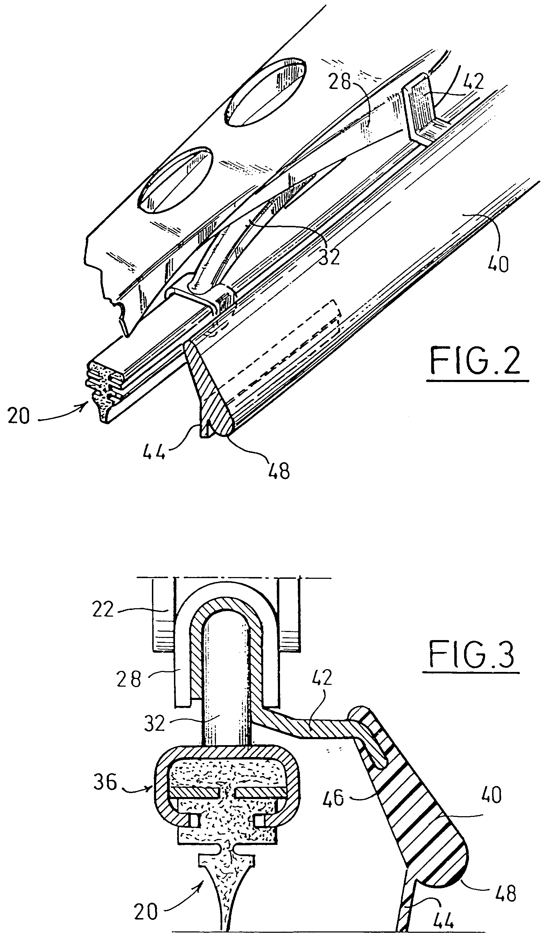

- la figure 2 est une vue plus détaillée en perspective de l'essuie-glace de la figure 1 ; et
- la figure 3 est une vue en coupe transversale d'un tel essuie-glace.

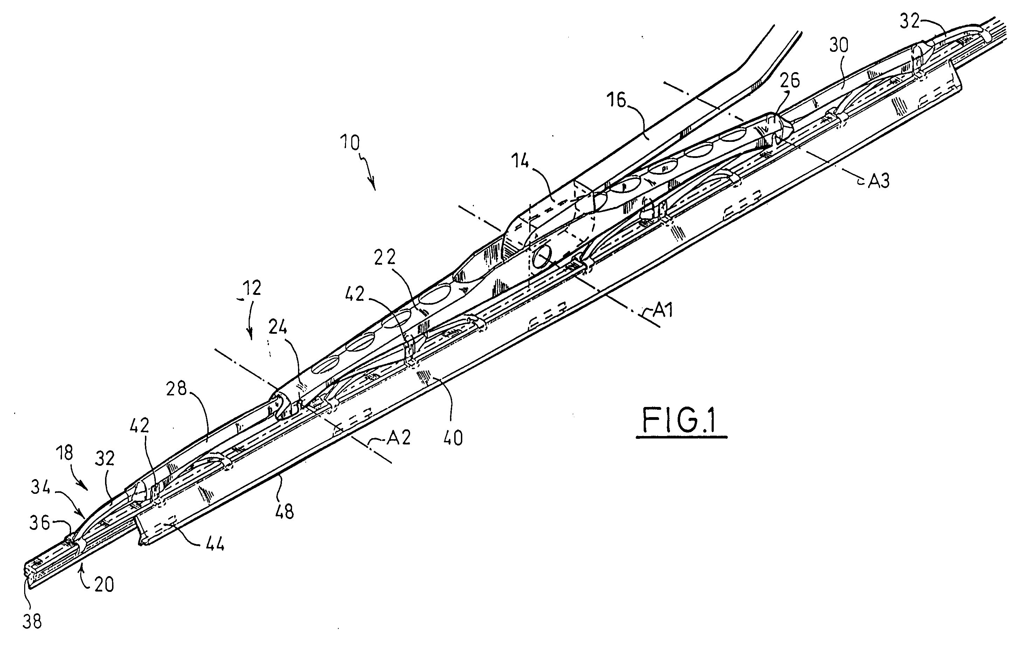

On a représenté sur la figure 1 un essuie-glace 10 de véhicule automobile comportant un balai d'essuie-glace 12 qui est monté articulé, autour d'un axe transversal A1, à l'extrémité longitudinale avant 14 d'un bras 16 qui entraîne l'essuie-glace 10 en balayage alterné.

De manière connue, le balai d'essuie-glace 12 comporte une structure articulée 18 qui s'étend dans un plan longitudinal perpendiculaire à une vitre à essuyer (non représentée) et qui porte une raclette d'essuyage 20 qu'elle est destinée à plaquer contre la vitre.

A cet effet, la structure articulée 18 comporte un étrier principal 22 qui est monté articulé sur l'extrémité avant 14 du bras 16 et à chacune des extrémités longitudinales 24, 26 duquel sont articulés, autour d'axes transversaux respectifs A2, A3, des étriers secondaires 28, 30 qui portent à leur tour, à chacune de leurs extrémités longitudinales, des palonniers articulés 32.

Les palonniers articulés 32 comportent à chacune de leurs deux extrémités longitudinales 34 des griffes 36 d'accrochage de la raclette 20 qui coopèrent avec un talon supérieur 38 de la raclette 20.

Le balai d'essuie-glace 12 ainsi représenté est un balai de grande longueur qui comporte de ce fait un étrier principal 22, deux étriers secondaires 28, 30 et quatre palonniers 32, et comporte ainsi huit griffes d'accrochage 36 de la raclette 20. Il va de soi que, pour un balai d'essuie-glace 12 de moindres dimensions, il est possible de diminuer le nombre de griffes d'accrochage 36 en supprimant, par exemple, un palonnier 32 ou même l'un des étriers secondaires 28, 30.

Le balai d'essuie-glace 12 selon l'invention est muni d'un déflecteur aérodynamique souple 40 qui s'étend longitudinalement sur un côté de la raclette 20.

Le déflecteur 40 comporte des organes de fixation 42 qui permettent son accrochage à chacune des extrémités longitudinales des étriers secondaires 28, 30.

Ainsi, lorsque la raclette 20 épouse le galbe de la vitre à essuyer, elle provoque une déformation de la structure articulée 18 qui se traduit notamment par un pivotement des étriers secondaires 28, 30 par rapport à leurs axes d'articulation A2, A3 sur l'étrier principal 22 si bien que le déflecteur souple est lui-même déformé, par l'intermédiaire de ses organes de fixation 42, jusqu'à présenter un profil vu de côté qui s'approche de celui de la vitre à essuyer à l'endroit où s'appuie la raclette.

Conformément aux enseignements de l'invention, le déflecteur souple 40 porte des doigts de contact 44, qui sont répartis régulièrement sur la longueur du déflecteur 40, et qui sont destinés à s'appuyer contre la vitre à essuyer pour procurer une adaptation fine de la déformation du déflecteur 40 de manière à ce que celui-ci présente un profil très proche de celui de la vitre à l'endroit considéré.

Dans l'exemple de réalisation de l'invention qui est représenté sur les figures, les doigts de contact 44 sont réalisés venus de matière avec le déflecteur 40, à proximité d'un bord inférieur 48, et ils s'étendent depuis une face latérale 46 tournée en direction du balai 12, vers le bas en direction de la vitre.

On peut également prévoir de réaliser les doigts de contact 44 sous la forme de pièces indépendantes sur lesquelles le déflecteur 40 est surmoulé. Cela permet d'utiliser des matériaux différents pour le déflecteur 40 et pour les doigts de contact 44 qui, étant destinés à frotter contre la vitre, doivent posséder un faible coefficient de frottement et surtout, doivent éviter tout endommagement de la surface vitrée.

Les doigts de contact 44 permettent d'obtenir de manière simple et fiable une déformation du déflecteur 40 qui suit fidèlement le galbe de la vitre à essuyer, de sorte que l'espace ménagé entre le bord inférieur 48 du déflecteur 40 et la surface vitrée peut être très faible.

Ainsi, on obtient une protection optimale de la lame active de la raclette 20 qui frotte sur la vitre.

Le nombre de doigts de contact 44 sur le déflecteur 40 peut varier en fonction de la longueur du déflecteur 40 mais également en fonction de l'importance du galbe de la vitre.

Ainsi, dans le cas d'une vitre peu galbée, on peut prévoir de réduire le nombre de doigts de contact 44 ou au contraire de l'augmenter dans le cas d'une vitre très galbée.

## Revendications

1. Essuie-glace de véhicule automobile, du type dans lequel un balai d'essuie-glace (12) est muni d'une structure articulée (18) qui est déformable dans un plan longitudinal perpendiculaire à une vitre à essuyer et qui porte, au moyen d'une série de griffes (36) agencées à chacune de ses extrémités terminales, une raclette d'essuyage (20) en matériau souple qu'elle plaque contre la vitre de sorte que la raclette (20) en épouse le galbe, et du type dans lequel le balai (12) comporte un déflecteur aérodynamique souple (40), caractérisé en ce que le déflecteur (40) comporte au moins un doigt de contact (44) qui est issu d'une face latérale du déflecteur (40), qui est en appui contre la vitre à essuyer et qui commande la déformation du déflecteur (40) en fonction du galbe de la vitre.

2. Essuie-glace selon la revendication 1, caractérisé en ce que la structure articulée (18) du balai (12) comporte un étrier longitudinal principal (22) qui est monté pivotant sur un bras d'essuie-glace (16) et qui porte au moins un palonnier (32) articulé à une de ses extrémité (24, 26), avec éventuellement interposition d'un étrier secondaire (28), en ce que chaque palonnier (32) comporte deux griffes de fixation (36) de la raclette (20), et en ce que le déflecteur (40) comporte au moins un organe de fixation (42) sur un élément (28, 32) de la structure articulée (18) autre que l'étrier principal (22), ou sur la raclette (20) de manière à ce que le déflecteur (40) soit déformé par ses organes de fixation (42) jusqu'à obtenir un profil sensiblement équivalent à celui du galbe de la vitre, le doigts de contact (44) provoquant une adaptation fine de la déformation du déflecteur (40).

3. Essuie-glace selon la revendication 2, caractérisé en ce que le doigt de contact (44) s'étend depuis une zone du déflecteur (40) proche d'un bord inférieur (48) tourné en direction de la vitre à essuyer.

4. Essuie-glace selon l'une quelconque de revendications précédentes, caractérisé en ce que le doigt de contact (44) est réalisé venu de matière avec le déflecteur souple (40).

5. Essuie-glace selon l'une quelconque des revendications 1 à 3, caractérisé en ce que le doigt de contact (44) est réalisé sous la forme d'une pièce indépendante sur laquelle le déflecteur (40) est surmoulé.

6. Essuie-glace selon l'une quelconque de revendications précédentes, caractérisé en ce que le déflecteur (40) comporte plusieurs doigts de contact (44) répartis régulièrement sur toute sa longueur.
